# EUROPEAN PATENT APPLICATION

(11) **EP 2 386 898 A1**
(43) Date of publication of application: **16.11.2011**
(21) Application number: 09837309.5
(22) Date of filing: 05.08.2009
(51) Int. Cl.: G02B 27/22, G03B 35/08, G03B 35/10, H04N 5/232, H04N 13/00

(54) **STEREOSCOPIC IMAGING APPARATUS AND METHOD**

(30) Priority: 07.01.2009 CN 200910104853
(71) Applicant: Inlife-handnet Co., Ltd., Nanshan District Shenzhen City Guangdong 518000 (CN)
(72) Inventor: TAN, Jianmin, Guangdong 518000 (CN)
(74) Representative: Acco, Stefania
(86) International application number: PCT/CN2009/073091
(87) International publication number: WO 2010/078751

(57) **Abstract**

This invention provides an apparatus for stereoscopic imaging. The stereoscopic imaging apparatus includes: a first optical imaging lens group, a second optical imaging lens group, a first flat reflector, a second flat reflector, a third reflector, a single image sensor, and an image processing circuit. The first and the second optical imaging lens groups receive light from outside respectively. The first and the second flat reflectors are used to perform the first reflection of the light from their corresponding first and second optical imaging lens groups respectively. The third reflector is located between the first flat reflector and the second flat reflector, which is used to perform the second reflection of the light from the first reflection. The single image sensor receives the light of the second reflection on its imaging plane to form two parallel images. The image processing circuit processes image signals of the image sensor to form stereoscopic image signals. The present invention further comprises a method for stereoscopic imaging. By employing the apparatus and method for stereoscopic imaging, as a single image sensor is used, a stereoscopic image with good imaging effect can be obtained with low cost.

## Description

### FIELD OF THE INVENTION

The present invention relates to technical field of stereoscopic imaging and processing, and more specifically relates to an apparatus and a method for stereoscopic imaging.

### BACKGROUND OF THE INVENTION

Stereoscopic imaging technology and stereoscopic imaging product can be applied in apparatus such as cellphone, camera, MP4, glasses-like display apparatus, reality simulating apparatus and remote control robot. Besides, they can play a major role in fields such as civilian, military, research and games.

Human eyes can produce stereoscopic feelings to the seen objects based on the visual differences between left and right eyes. Thus, common stereoscopic imaging apparatus all use dual camera lens to image the object and then process the images. However, it may bring outstanding issues mainly as follows. 1, the dual lens have inconsistent focusing performances which results in different definitions of left and right video, and finally results in blur images. 2, the installation of dual lens cannot guarantee the consistent counterpoint of the images such that the consistency of the level and tilt of the image can not be guaranteed in visual angle, then there may be deviation when the two images are three-dimensionally superposed and as a result, there will be fuzzy ghost on the image. 3, the inconsistency of dual image sensors may lead to the inconsistencies of the characteristics of the image such as brightness, contrast, chroma and grayscale, and there may be evident visual difference between the left and right images, which may produce visual dizziness, blurred images and so on when the images are three-dimensionally superposed. 4, it is difficult for dual image sensors to ensure the pixel synchronization of two images when they are imaging, time gap generates between left and right images, so that two desynchronized images present when combining stereoscopic images or photos, which results in reduction even losing of stereo effect but obtaining ghost. Therefore, a stereoscopic imaging apparatus and stereoscopic imaging method are needed, which use precise optical imaging structure to ensure the consistency along the optical path, and use a single image sensor to accept the images in two paths to ensure the complete consistency in the electronic performances of the images as well as synchronization performances.

### SUMMARY OF THE INVENTION

An apparatus and a method for stereoscopic imaging, substantially as shown in and/or described in connection with at least on of the figures, as set forth more completely in the claims, aiming at the technical problems of the prior art such as blur images, inconsistency upon the usage of dual image sensors, and the inconsistency in brightness, contrast, color, grayscale and synchronization of the images resulting from the differences in synchronization performance.

According to an aspect, a stereoscopic imaging apparatus is provided, which comprising:
a first optical imaging lens group and a second optical imaging lens group operable to simulate human eyes to receive external light;
a first flat reflector, a second flat reflector and a third reflector, the first and second flat reflectors are operable to conduct a first reflection of the light from the first optical imaging lens group and the second optical imaging lens group, the third reflector is located between the first and second flat reflectors and is operable to conduct a second reflection of the light from the first reflection;
a single image sensor operable to receive the light from the second reflection on its imaging plane and to form two parallel images;
an image processing circuit operable to receive image signals from the image sensor and to process received image signals to generate stereoscopic image signals.

Advantageously, lateral distance between the first and second optical imaging lens groups ranges from 40mm to 100mm.

Advantageously, the third reflector is a reflector having two sides arranged with a certain angle.

Advantageously, the single image sensor is a CCD/CMOS image sensor.

Advantageously, the image processing circuit further comprises an image data acquisition circuit, a left frame buffer, a right frame buffer and an image format processing circuit;
the image data acquisition circuit is operable to acquire image signal data from the image sensor and divide the image signal data into two image data;
the left frame buffer and the right frame buffer are operable to buffer the two image data divided by the image data acquisition circuit respectively;
the image format processing circuit is operable to combine the two image data from the left frame buffer and the right frame buffer to produce stereoscopic image data.

According to the present invention, to achieve the objective better, a stereoscopic imaging method is provided, the method comprising:
S1, installing two optical imaging lens groups laterally and parallelly to simulate human eyes to receive external light;
S2, conducting a first reflection of the external light received by the two optical imaging lens groups through two flat reflectors, and conducting a second reflection of the two lights from the first reflection through a third reflector located between the two flat reflectors;
S3, utilizing a single image sensor to receive the light of the second reflection from the third reflector on its imaging plane and forming two parallel images;
S4, processing image signals formed by the single image sensor to generate stereoscopic image signals.

Advantageously, in the step S1, lateral distance between the first and second optical imaging lens groups ranges from 40mm to 100mm.

Advantageously, the third reflector is a reflector having two sides arranged with a certain angle.

Advantageously, the single image sensor is a CCD/CMOS image sensor.

Advantageously, the step S4 further comprises:
541, acquiring image signal data formed by the single image sensor;
S42, dividing the acquired image signal data formed by the single image sensor into two image data and buffer them in a left frame buffer and a right frame buffer respectively;
S43, combining the image data buffered in the left frame buffer and right frame buffer to produce stereoscopic image data.

The stereoscopic imaging apparatus and method provided according to the present invention when implementing can obtain full screen image without delay between the left and right images by using a single image sensor. Compared to the existing technology, the image presented in the present invention has advantages such as no delay between the left and right images (namely good synchronization performance), variations format of screen video, high uniformity of screen quality, so that technical problem of blurred image presented in the existing technology are solved, and consistency of electronically performance and synchronization of the image are guaranteed.

### DETAILED DESCRIPTION OF THE PREFERRED EMBODIMENT

These and other advantage, aspect and novel features of the present invention, as well as details of an illustrated embodiment thereof, will be more fully understand from the following description and drawings. While various embodiments of the present invention has been presented by way of example only, and not limitation.

So as to further explain the invention, an exemplary embodiment of the present invention will be described with reference to the below drawings.

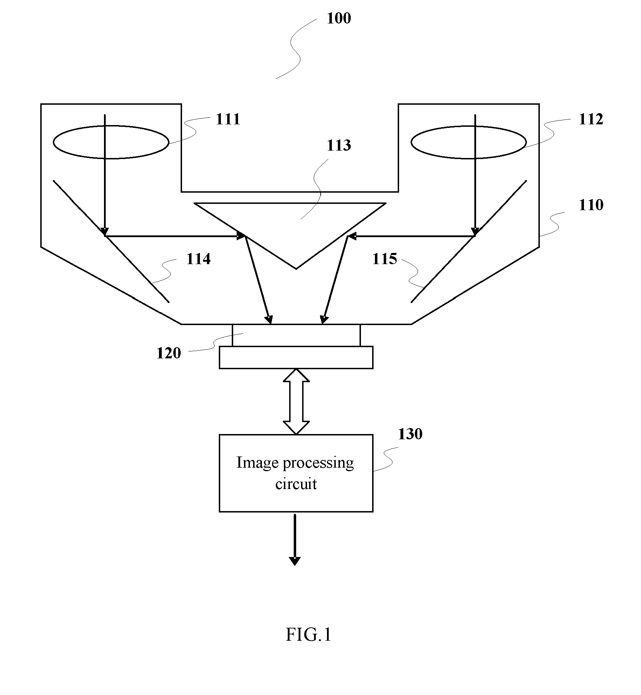

FIG.1 is a block diagram illustrating a stereoscopic imaging apparatus in accordance with a preferred embodiment of the invention. Referring to FIG. 1, the stereoscopic imaging apparatus 100 comprises optical imaging elements 110, a single image sensor 120 and an image processing circuit 130.

The optical imaging elements 110 further comprises a first optical imaging lens group 111, a second optical imaging lens group 112, a first flat reflector 114, a second flat reflector 115 and a third reflector 113.

The first optical imaging lens group 111 and the second optical imaging lens group 112 are operable to simulate human eyes to receive external light. The lateral distance between the first optical imaging lens group 111 and the second optical imaging lens group 112 is in the range from 40mm to 100mm, which is the same as the pupillary distance of human eyes, so as to ensure the structure precision upon installation. The first flat reflector 114 and the second flat reflector 115 are operable to conduct a first reflection of the light from the first and second optical imaging lens groups 111 and 112. The third reflector 113 located between the first flat reflector 114 and the second flat reflector 115 is operable to conduct a second reflection for the once reflected light. The third reflector 113 can be a reflector having two sides arranged with a certain angle or a reflector having dual reflecting planes with other stereoscopic shapes. The single image sensor 120 may be a CCD/CMOS image sensor, the imaging plane of which may receive the twice reflected light from the third reflector 113 and form two parallel images. The imaging plane of the single image sensor 120 are correspondingly doubled in width as the normal 4:3 or 16:9 so as to receive two complete images simultaneously. The image processing circuit 130 further comprises an image data acquisition circuit, a left frame buffer, a right frame buffer and an image format processing circuit. The image data acquisition circuit is operable to acquire image signal data from the image sensor and divide the image signal data into two image data. The left frame buffer and the right frame buffer are operable to buffer the two image data divided by the image data acquisition circuit respectively. The image format processing circuit is operable to combine the two image data from the left and the right frame buffers to produce stereoscopic image data. The image processing circuit 130 is able to read the left eye image and right eye image simultaneously and extract the integral left eye and right eye images inside the circuit, then it will output stereoscopic video signal of different formats based on the stereo-imaging principle of the display apparatus. For example, a glasses-like stereoscopic display can output a video signal of odd and even fields alternating in the left and right orders, namely odd field - left image, even field - right image or otherwise. As another example, a red and blue field stereoscopic display is able to perform red and blue process on the same field of the left and right eyes and then combine the pixels, and output the image orderly. At the same time, encoding technology can be used to encode and compress the video for recording and storing.

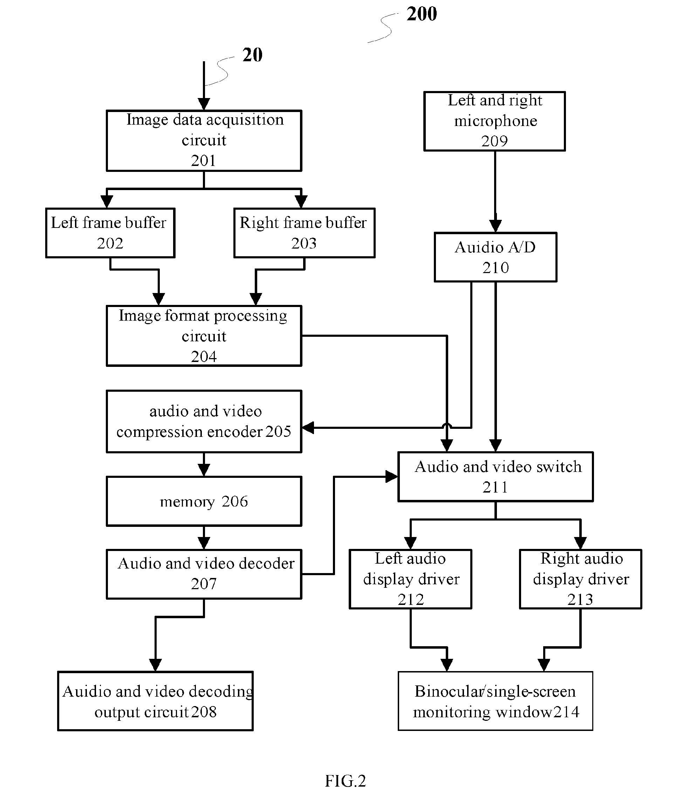

FIG.2 is a block diagram illustrating an image processing circuit in a stereoscopic imaging apparatus in accordance with a preferred embodiment of the invention. Referring to FIG.2, the image processing circuit 200 may receive image signal data 20 from the single image sensor. The image processing circuit 200 comprises an image data acquisition circuit 201, a left frame buffer 202, a right frame buffer 203, an image format processing circuit 204, an audio and video compression encoder 205, a memory 206, an audio and video decoder 207, an audio and video decoding output circuit 208, a left and right microphone 209, an audio A/D 210, an audio and video switch 211, a left audio display driver 212, a right audio display driver 213 and a binocular/single-screen monitoring window 214. Wherein, the image data acquisition circuit 201 reads image at a certain frame frequency for reading the image signal data 20 comprising two images formed simultaneously, from the single image sensor, and then divides the left the right screen data. The divided images are two full-frame images obtained simultaneously and are buffered in the left frame buffer 202 and the right frame buffer 203 respectively. Image format processing circuit 204 may combine the image data in the left frame buffer 202 and the right frame buffers 203, and then process the combined data to generate parallel (side-by-side) images directly, as well as the frame-by-frame image, field-by-field image, line-by-line image, dot-by-dot image and so on.

After format converting by the image format processing circuit 204 according to requirement, the image will enter the audio and video compression encoder 205, where the audio and video can be compressed and encoded simultaneously. Then, the encoded data will enter the memory 206 and stored therein. If the stored image is to be watched, the data will be extracted out of the memory 206 and processed through the audio and video decoder 207and then outputted to the external display for presenting or be watched using the binocular/single-screen monitoring window 214 integrated in the stereoscopic imaging apparatus.

An audio and video switch 211 may be additionally provided in the image processing circuit 200, and is operable to forward the side-by-side image signals directly to the binocular/single-screen monitoring window 214 in the stereoscopic imaging apparatus 200 for displaying when the stereoscopic imaging apparatus is imaging and the imaging screen should be monitored in the case that the side-by-side image signal is outputted by the image format processing circuit 204 after the images are divided. At the same time, the real-time audio from the left and right microphone 209 converted by the audio A/D 210 is also switched. In this way, the delay between the screen and actual scene is less when monitoring the screen, so that timely monitoring is facilitated. The performance described above may also be referred as Cut-through. When the recorded program is replaying, the audio and video switch 211 may switch the signal to the output of the audio and video decoder 207. As a result, the recorded episode can be appreciated.

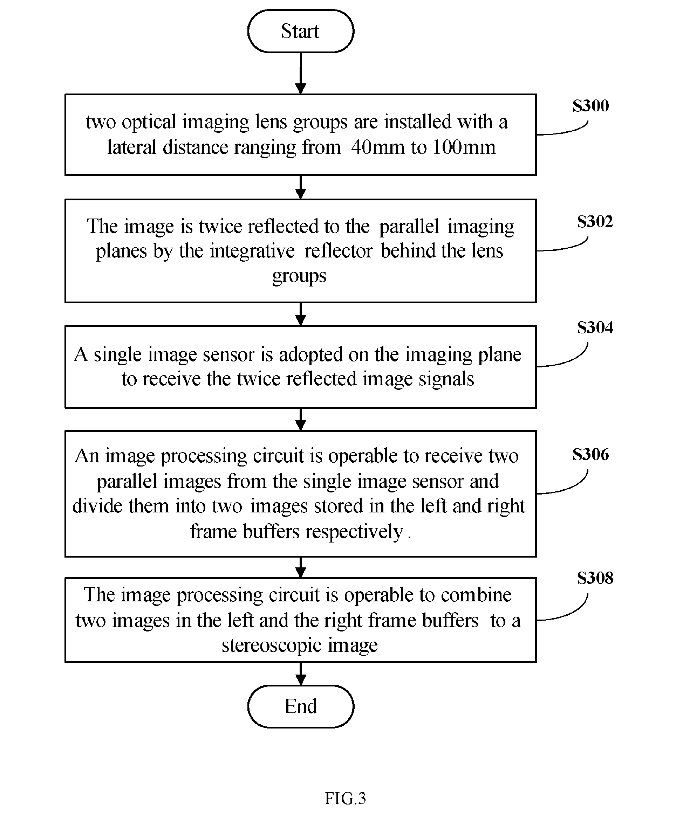

FIG.3 is a flow chart illustrating a stereoscopic imaging method in accordance with a preferred embodiment of the invention. Referring to FIG.3, the method comprises following steps.

In the step S300, two optical imaging lens groups are installed with a lateral distance ranging from 40mm to 100mm to simulate human eyes to receive external light.

In the step S302, two flat reflectors behind the two optical imaging lens groups are operable to conduct a first reflection of the light from the two optical imaging lens groups respectively, then a stereoscopic reflector located between the two flat reflectors is operable to conduct a second reflection of the lights from the first reflection. Thus, the two images may be twice reflected to a parallel imaging plane.

In the step S304, a single image sensor is adopted on the above-mentioned imaging plane to receive two parallel images from the second reflection.

In the step S306, an image processing circuit is operable to receive image data from the single image sensor and divide the image data into two image data stored in the left and right frame buffers.

In the step S308, the image processing circuit is operable to combine the image data in the left and the right frame buffers and process them to form a stereoscopic image, which may be processed to directly generate side-by-side images, as well as frame-by-frame images, field-by-field images, line-by-line images, dot-by-dot images and so on.

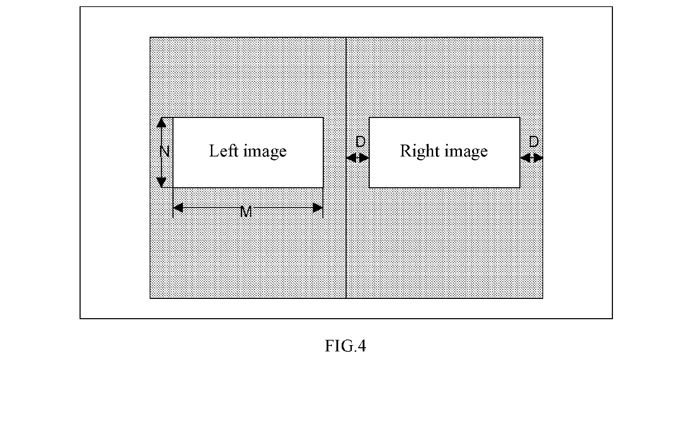

FIG.4 is a diagram illustrating an imaging on the imaging plane of the single image sensor in a stereoscopic imaging apparatus in accordance with a preferred embodiment of the invention, wherein the size of the imaging plane of the CCD/CMOS image sensor is selected to be slightly larger than the sum of two images in lateral needed to be outputted. Assuming that the size of the image needed to be outputted for displaying is M*N, wherein M refers to the width and N refers to the height, then the lateral size of the imaging plane of the CCD/CMOS image sensor should be selected as more than 120% *2M. The images are imaged on both sides (symmetric about the center axis) of the imaging plane of the CCD/CMOS image sensor, forming side-by-side without crossing. The image is selected according to the FIG.4, namely M*N, and the remaining area D occupying nearly 10% of the width of the image has been left alone both in the left and right.

The foregoing description is just the preferred embodiment of the invention. It is not intended to exhaustive or to limit the invention. Any modifications, variations, and amelioration without departing from the spirit and scope of the present invention should be included in the scope of the prevent invention.

## Claims

1. A stereoscopic imaging apparatus, wherein, comprising:
a first optical imaging lens group (111) and a second optical imaging lens group (112) operable to simulate human eyes to receive external light;
a first flat reflector (114), a second flat reflector (115) and a third reflector (113), the first flat reflector (114) and the second flat reflector (115) are operable to conduct a first reflection of the light from the first optical imaging lens group (111) and the second optical imaging lens group (112), the third reflector is located between the first flat reflector (114) and the second flat reflector (115) and is operable to conduct a second reflection of the light from the first reflection;
a single image sensor (120) operable to receive the light from the second reflection on its imaging plane and to form two parallel images;
an image processing circuit (130) operable to receive image signals from the image sensor and to process received image signals to generate stereoscopic image signals.

2. The stereoscopic imaging apparatus according to claim 1, wherein, lateral distance between the first optical imaging lens group (111) and the second optical imaging lens group (112) ranges from 40mm to 100mm.

3. The stereoscopic imaging apparatus according to claim 2, wherein, the third reflector (113) is a reflector having two sides arranged with a certain angle.

4. The stereoscopic imaging apparatus according to claim 3, wherein, the single image sensor (120) is a CCD/CMOS image sensor.

5. The stereoscopic imaging apparatus according to any one of claims 1-4, wherein, the image processing circuit (130) further comprises an image data acquisition circuit (201), a left frame buffer (202), a right frame buffer (203) and an image format processing circuit (204);
the image data acquisition circuit (201) is operable to acquire image signal data from the image sensor (120) and to divide the image signal data into two image data;
the left frame buffer (202) and the right frame buffer (203) are operable to buffer the two image data divided by the image data acquisition circuit (201) respectively;
the image format processing circuit (204) is operable to combine the two image data from the left frame buffer (202) and the right frame buffer (203) to produce stereoscopic image data.

6. A stereoscopic imaging method, wherein, comprising:
S1, installing two optical imaging lens groups (111, 112) laterally and parallelly to simulate human eyes to receive external light;
S2, conducting a first reflection of the external light received by the two optical imaging lens groups (111, 112) through two flat reflectors (114, 115), and conducting a second reflection of the two lights from the first reflection through a third reflector (113) located between the two flat reflectors;
S3, utilizing a single image sensor (120) to receive the light of the second reflection from the third reflector (113) on its imaging plane and forming two parallel images;
S4, processing image signals formed by the single image sensor (120) to generate stereoscopic image signals.

7. The stereoscopic imaging method according to claim 6, wherein, in the step S1, lateral distance between the first optical imaging lens group (111) and the second optical imaging lens group (112) ranges from 40mm to 100mm.

8. The stereoscopic imaging method according to claim 6, wherein, the third reflector (113) is a reflector having two sides arranged with a certain angle.

9. The stereoscopic imaging method according to claim 6, wherein, the single image sensor (120) is a CCD/CMOS image sensor.

10. The stereoscopic imaging method according to claim 6, wherein, the step S4 further comprises:
S41, acquiring image signal data formed by the single image sensor (120);
S42, dividing the acquired image signal data formed by the single image sensor (120) into two image data and buffer them in a left frame buffer (202) and a right frame buffer (203) respectively;
S43, combining the image data buffered in the left frame buffer (202) and right frame buffer (203) to produce stereoscopic image data.
